# EUROPÄISCHE PATENTSCHRIFT

(11) **EP 0 476 744 B1**
(45) Veröffentlichungstag und Bekanntmachung des Hinweises auf die Patenterteilung: **05.04.1995**
(21) Anmeldenummer: 91202265.4
(22) Anmeldetag: 05.09.1991
(51) Int. Cl.: C01B 17/90, C01B 17/88

(54) **Verfahren zur Aufkonzentrierung von Dünnsäure in einer dreistufigen Vakuumzwangsumlaufverdampferanlage**
Process for the concentration of diluted acid in a three-stage vacuum evaporator system
Procédé pour concentration d'acide dilué par un evaporateur à vide à trois étappes

(30) Priorität: 20.09.1990 DE 4029737
(43) Veröffentlichungstag der Anmeldung: 25.03.1992
(73) Patentinhaber: METALLGESELLSCHAFT Aktiengesellschaft, 60015 Frankfurt (DE)
(72) Erfinder: Wagner, Hartmut, Dr., W-4130 Moers (DE); Wichert, Volker, W-4223 Voerde (DE); Fach, Roland, W-4235 Schermbeck (DE); Engels, Klaus, W-4173 Kerken 1 (DE); Okon, Günter, Dr., W-4152 Kempen-Tönisberg (DE)

(56) Entgegenhaltungen:
- EP-A- 0 022 181
- EP-A- 0 133 505
- EP-A- 0 262 510
- Winnacker-Küchler: Chemische Technologie, Band 2 (1982) Seite 65-67

## Beschreibung

Die Erfindung bezieht sich auf ein Verfahren zur Aufkonzentrierung von Dünnsäure in einer dreistufigen Vakuumzwangsumlaufverdampferanlage, bei dem Dünnsäure der ersten Stufe zugeführt wird und aus der dritten Stufe eine aufkonzentrierte Schwefelsäure abgeführt wird, wobei Wasserdampf und/oder Brüdendampf als Heizmedium in der dreistufigen Vakuumzwangsumlaufverdampferanlage eingesetzt werden und wobei im Verdampferbehälter der ersten Stufe ein Druck von 0,4 bis 0,7 bar sowie eine Temperatur von 80 bis 120°C, im Verdampferbehälter der zweiten Stufe ein Druck von 0,02 bis 0,06 bar sowie eine Temperatur von 50 bis 90°C und im Verdampferbehälter der dritten Stufe ein Druck von 0,02 bis 0,06 bar sowie eine Temperatur von 80 bis 120°C eingestellt werden, und wobei die nicht als Heizmedium eingesetzten Brüdendämpfe kondensiert werden.

In der EP-A-0 313 715 wird ein Verfahren zur energie- und materialsparenden Aufarbeitung der bei der Titanoxidherstellung nach dem Sulfatverfahren anfallenden Dünnsäure durch Ausnutzung der Wärme bei der Calcinierung des Titandioxidhydrats anfallenden heißen Calcinierabgase beschrieben, bei dem Dünnsäure aufkonzentriert wird und das Titandioxid, das in den Calcinierabgasen enthalten ist, wiedergewonnen wird. Bei diesem Verfahren ist vorteilhaft, daß mit dem anfallenden Rückstand ein wesentlicher Teil des in der vorkonzentrierten Säure enthaltenen Calciumsulfats aus dem Prozeß ausgeschleust und damit unerwünschte Ausfällungen von Calciumsulfat in späteren Verfahrensstufen vermindert werden.

Die EP-A-0 133 505 beschreibt ein Verfahren, bei dem metallsulfathaltige Dünnsäure einer Konzentration von 23 bis 28 Gew.-% Schwefelsäure in einer ersten Stufe unter Ausnutzung von Prozeßwärme auf maximal 32 Gew.-% H₂SO₄ vorkonzentriert wird. Das dabei ggf. ausfallende Eisen(II)-Sulfat-Heptahydrat wird abgetrennt. Die vorkonzentrierte Säure wird auf 62 bis 70 Gew.-% H₂SO₄ aufkonzentriert, abgekühlt und nach Abtrennung der ausgefallenen Metallsalze und ggf. einer zusätzlichen Aufkonzentrierung in den Aufschluß rückgeführt. Anschließend erfolgt eine thermische Aufspaltung der anfallenden Metallsalze.

In der EP-A-0 097 259 wird ein Verfahren beschrieben, bei dem die bei der Calcinierung des Titandioxidhydrates entstehenden, etwa 400 bis 500°C heißen Schwefeloxide und staubförmiges Titandioxid enthaltenden Calcinierabgase bei Temperaturen oberhalb 320°C durch Filter oder elektrostatische Gasreinigung gereinigt werden. Die gereinigten Gase werden teilweise in die Brennkammer zurückgeführt und mit der zu konzentrierenden Säure in Kontakt gebracht.

In der Regel wird die bei der Titandioxidproduktion anfallende Dünnsäure mittels einer Vakuumeindampfung auf eine Endkonzentration von 60 bis 70 Gew.-% (feststofffrei, d.h. ohne Berücksichtigung der ungelösten Salze) eingedampft. Dabei ist es üblich, mehrstufige Vakuumzwangsumlaufverdampferanlagen einzusetzen. Nach einer bevorzugten Ausführung des aus der EP-A-0 133 505 bekannten Verfahrens ist vorgesehen, die Aufkonzentrierung in einer dreistufigen Vakuumzwangsumlaufverdampferanlage vorzunehmen. Dabei wird die aufzukonzentrierende Dünnsäure zunächst der ersten Stufe zugeführt und einer ersten Aufkonzentrierung unterworfen. Die aufkonzentrierte Dünnsäure durchläuft anschließend nacheinander die zweite und dritte Stufe, wobei jeweils eine weitere Aufkonzentrierung erfolgt und der dritten Stufe eine aufkonzentrierte Schwefelsäure entnommen wird.

Dieses Verfahren hat den Nachteil, daß in der ersten Stufe große Mengen von Gips anfallen, die sich in der ersten Stufe niederschlagen und die Funktion der ersten Stufe nachteilig beeinflussen. Infolge dieser schwer zu entfernenden Gipsablagerungen sind aufwendige Wartungsarbeiten bereits nach kurzen Betriebszeiten erforderlich, wodurch die Kosten des Verfahrens erhöht werden.

Die der Erfindung zugrundeliegende Aufgabe besteht darin, ein Verfahren zur Aufkonzentrierung von Dünnsäure in einer dreistufigen Vakuumzwangsumlaufverdampferanlage zu schaffen, bei dem schwer zu entfernende Gipsablagerungen in der ersten Stufe vermieden werden und umfangreiche Wartungsarbeiten, selbst nach längeren Betriebszeiten, nicht erforderlich sind.

Die der Erfindung zugrundeliegende Aufgäbe wird dadurch gelöst, daß 30 bis 95 % der Dünnsäure dem Verdampferbehälter der ersten Stufe kontinuierlich zugeführt werden und die restliche Menge der Dünnsäure dem Verdampferbehälter der zweiten Stufe kontinuierlich zugeführt wird. Die Konzentration der aufzukonzentrierenden Dünnsäure beträgt in der Regel 20 bis 25 Gew.-%. Die Konzentration der aus der dritten Stufe abgeführten, aufkonzentrierten Schwefelsäure beträgt 64 bis 70 Gew.-% (feststofffrei). Jede einzelne Verdampferstufe der dreistufigen Vakuumzwangsumlaufverdampferanlage besteht aus einem Verdampferbehälter, an dem eine Umwälzleitung mit Umwälzpumpe und ein Rohrbündelwärmetauscher angeschlossen sind. Die aufzukonzentrierende Dünnsäure zirkuliert in dem jeweiligen Verdampferkreislauf in der für die jeweilige Stufe entsprechenden Konzentration, wobei die Dünnsäure jeweils im Rohrbündelwärmetauscher leicht überhitzt wird und im Verdampferbehälter ein Teil des Wassers durch Entspannung ausgedampft wird. Der Druck des Wasserdampfs, der als Heizmedium verwendet wird, beträgt in der Regel 1 bis 6 bar. Es hat sich in überraschender Weise gezeigt, daß es durch die erfindungsgemäße Aufteilung und Einspeisung der aufzukonzentrierenden Dürnsäure nicht zur Ausbildung der nachteiligen, schwer zu entfernenden Gipsablagerungen in der ersten Stufe kommt.

Gleichzeitig ist sichergestellt, daß die Konzentration der Dünnsäure in der ersten Stufe auf 35 bis 50 Gew.-% (feststofffrei) angehoben werden kann, wobei die Konzentrationsverhältnisse in der zweiten und dritten Stufe im Vergleich zu dem in der DE-OS 33 27 769 beschriebenen Verfahren unverändert bleiben.

Eine bevorzugte Ausgestaltung der Erfindung besteht darin, daß mindestens ein Teil der Dünnsäure vor Eintritt in die dreistufige Vakuumzwangsumlaufverdampferanlage in mindestens einem Vorwärmer auf 30 bis 99°C vorgewärmt wird. Dadurch wird der Energiebedarf der ersten Stufe verringert.

Nach einer weiteren Ausgestaltung der Erfindung wird die Dünnsäure vor Eintritt in die dreistufige Vakuumzwangsumlaufverdampferanlage durch Ausnutzung von Prozeßwärme auf eine Konzentration von 25 bis 32 Gew.-% (feststofffrei) vorkonzentriert. Dadurch läßt sich die Aufkonzentrierung von Dünnsäure in der dreistufigen Vakuumzwangsumlaufverdampferanlage besonders kostengünstig durchführen.

Gemäß einer weiteren bevorzugten Ausgestaltung der Erfindung wird in der ersten Stufe und in der dritten Stufe Wasserdampf als Heizmedium eingesetzt, und der aus dem Verdampferbehälter der ersten Stufe abgeführte Brüdendampf wird in der zweiten Stufe als Heizmedium eingesetzt. Durch diese Maßnahme läßt sich das Verfahren zur Aufkonzentrierung von Dünnsäure in der dreistufigen Vakuumzwangsumlaufverdampferanlage mit einem relativ geringen Energieaufwand durchführen.

Nach einer weiteren Ausgestaltung der Erfindung werden die in der zweiten Stufe und in der dritten Stufe anfallenden Brüdendämpfe getrennt in jeweils mindestens einem Kondensator kondensiert. Werden die in der zweiten und in der dritten Stufe anfallenden Brüdendämpfe getrennt in jeweils mindestens einem Kondensator kondensiert, so können die Kondensate der Brüdendämpfe der zweiten und dritten Stufe entsprechend ihrer unterschiedlichen Schadstoffbelastung getrennt voneinander weiterverarbeitet werden.

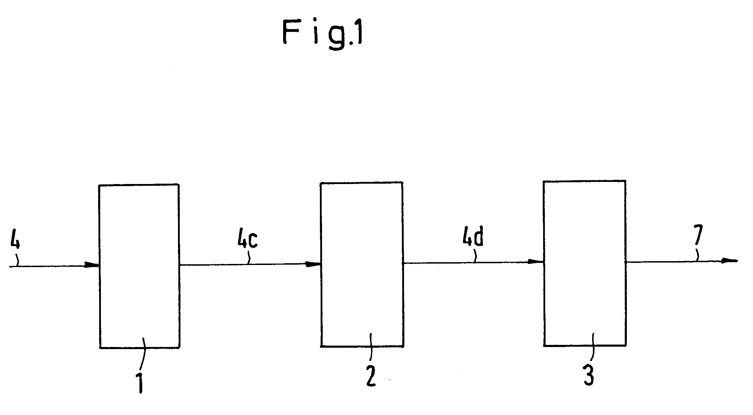

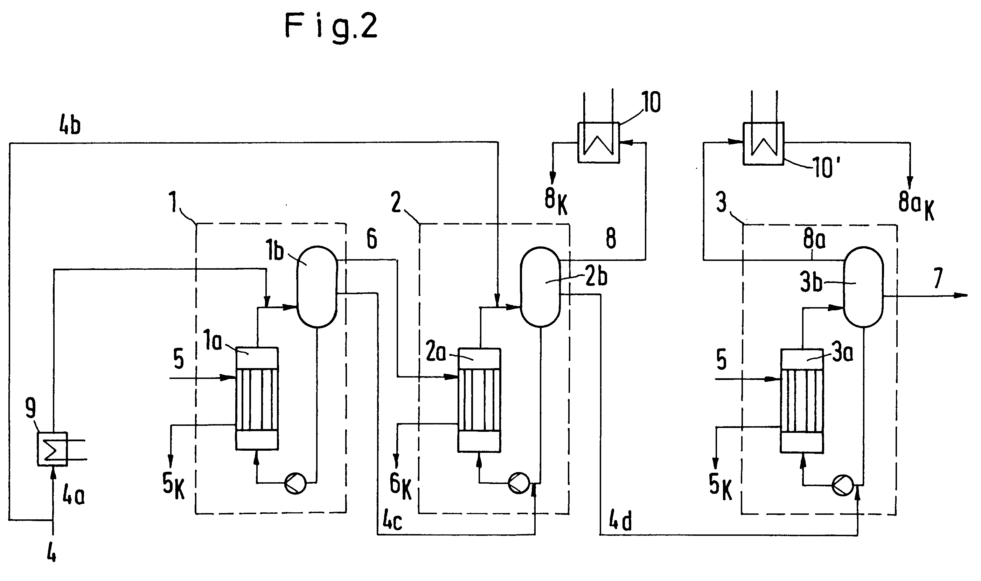

Der Gegenstand der Erfindung wird nachfolgend anhand der Zeichnung (Figuren 1 und 2) näher erläutert.

Fig. 1 zeigt das Verfahrensfließbild einer dreistufigen Vakuumzwangsumlaufverdampferanlage gemäß der bevorzugten Ausführung des in der EP-A-133505 beschriebenen Verfahrens.

Fig. 2 zeigt das Verfahrensfließbild einer dreistufigen Vakuumzwangsumlaufverdampferanlage nach dem erfindungsgemäßen Verfahren.

In Fig. 1 ist ein Fließbild der dreistufigen Vakuumzwangsumlaufverdampferanlage gemäß derjenigen bevorzugten Ausführung, die in der EP-A-133505 beschrieben wird, vereinfacht und schematisch dargestellt. Wie in der DE-OS 33 27 769 beschrieben wird, wird die gesamte Menge der Dünnsäure (4) einer ersten Stufe (1) zugeführt und verläßt diese als aufkonzentrierte Dünnsäure (4c), die anschließend einer zweiten Stufe (2) zugeführt wird, in welcher eine weitere Aufkonzentrierung erfolgt. Die weiter aufkonzentrierte Dünnsäure (4d) wird aus der zweiten Stufe (2) abgeführt und in der dritten Stufe (3) bis zur gewünschten Endkonzentration von 67 Gew.-% (feststofffrei) aufkonzentriert. Die aufkonzentrierte Schwefelsäure (7) wird aus der dritten Stufe (3) abgeführt.

In Fig. 2 ist das Fließbild einer dreistufigen Vakuumzwangsumlaufverdampferanlage gemäß dem erfindungsgemäßen Verfahren beispielhaft dargestellt. Ein Teil (4a) der Dünnsäure (4) wird in einem Vorwärmer (9) vorgewärmt und anschließend dem Verdampferbehälter (1b) der ersten Stufe (1) zugeführt. Der Rohrbündelwärmetauscher (1a) der ersten Stufe (1) wird mit Heizdampf (5) beheizt, der als Kondensat (5_{K}) aus dem Rohrbündelwärmetauscher (1a) abgeführt wird. Der Verdampferbehälter (1b) der ersten Stufe (1) ist über eine Umwälzleitung mit Umwälzpumpe mit dem Rohrbündelwärmetauscher (1a) verbunden. Die zweite Stufe (2) und die dritte Stufe (3) weisen jeweils dieselbe Anordnung von Umwälzpumpe und Rohrbündelwärmetauscher (2a bzw. 3a) auf wie die erste Stufe (1). Die in der ersten Stufe (1) aufkonzentrierte Dünnsäure (4c) wird aus dem Verdampferbehälter (1b) abgeführt und gelangt anschließend in die zweite Stufe (2). Der Brüdendampf (6), der in der ersten Stufe (1) anfällt, wird dem Verdampferbehälter (1b) entnommen und als Heizmedium in der zweiten Stufe (2) eingesetzt. Dabei kommt es zu einer Kondensation des Brüdendampfes (6) im Rohrbündelwärmetauscher (2a), wobei das Kondensat (6_{K}) des Brüdendampfes (6) aus dem Rohrbündelwärmetauscher (2a) abgeführt wird. Der restliche Teil (4b) der Dünnsäure (4) wird direkt der zweiten Stufe (2) zugeführt. Die weiter aufkonzentrierte Dünnsäure (4d) wird dem Verdampferbehälter (2b) entnommen und der dritten Stufe (3) zugeführt. Die dritte Stufe (3) wird dabei mit Wasserdampf (5) beheizt, der als Kondensat (5_{K}) dem Rohrbündelwärmetauscher (3a) entnommen wird. Die in den Verdampferbehältern (2b) und (3b) anfallenden Brüden (8) und (8a) werden jeweils getrennt einem Kondensator (10 bzw. 10') zugeführt, kondensiert und anschließend als Kondensate (8_{K}) und (8a_{K}) abgeführt. Die aufkonzentrierte Schwefelsäure (7) wird als Endprodukt dem Verdampferbehälter (3b) entnommen.

Der Gegenstand der Erfindung wird nachfolgend anhand eines Beispiels näher beschrieben:
In einer dreistufigen Vakuumzwangsumlaufverdampferanlage werden 33 t/h Dünnsäure (4) mit einer Ausgangskonzentration von 24,4 Gew.-% aufkonzentriert. Dabei werden 17,8 t/h Dünnsäure (4a) in einem Vorwärmer (9) von 25 auf 99°C erwärmt und anschließend kontinuierlich der ersten Stufe (1) zugeführt. Im Verdampferbehälter (1b) der ersten Stufe (1) herrschen ein Druck von 0,65 bar und eine Temperatur von 117°C. Die aus dem Verdampferbehälter (1b) der ersten Stufe (1) abgeführte, aufkonzentrierte Dünnsäure (4c), die eine Konzentration von 42,3 Gew.-% (feststofffrei) aufweist, wird der zweiten Stufe (2) zugeführt. Die restlichen 15,2 t/h Dünnsäure (4b) werden ebenfalls kontinuierlich der zweiten Stufe (2) zugeführt. Im Verdampferbehälter (2b) der zweiten Stufe (2) wird die Mischung aus aufkonzentrierter Dünnsäure (4c) und Dünnsäure (4b) bis zu einer Konzentration von 52,6 Gew.-% (feststofffrei) aufkonzentriert. Im Verdampferbehälter (2b) der zweiten Stufe (2) herrschen ein Druck von 0,05 bar und eine Temperatur von 71°C. Im Gegensatz zur ersten Stufe (1), die mit 7,5 t/h Heizdampf (5) beheizt wird, wird die zweite Stufe (2) mit 6,5 t/h Brüdendampf (6) beheizt, der dem Verdampferbehälter (1b) der ersten Stufe (1) entnommen und dem Rohrbündelwärmetauscher (2a) der zweiten Stufe (2) zugeführt wird. Die in der zweiten Stufe (2) auf 52,6 Gew.-% (feststoffrei) aufkonzentrierte Dünnsäure (4d) wird dem Verdampferbehälter (2b) der zweiten Stufe (2) entnommen und der dritten Stufe (3) zugeführt, die mit 4,2 t/h Wasserdampf (5) beheizt wird. Im Verdampferbehälter (3b) der dritten Stufe (3) herrschen ein Druck von 0,05 bar und eine Temperatur von 117°C. In der dritten Stufe (3) wird die Dünnsäure (4d) auf eine Endkonzentration von 67,7 Gew.-% (feststoffrei) aufkonzentriert und als aufkonzentrierte Schwefelsäure (7) aus dem Verdampferbehälter (3b) der dritten Stufe (3) abgeführt. Die in der zweiten Stufe (2) und in der dritten Stufe (3) anfallenden Brüdendämpfe (8) bzw. (8a) werden aus den jeweiligen Verdampferbehältern (2b) bzw. (3b) abgeführt und anschließend kondensiert.

## Patentansprüche

1. Verfahren zur Aufkonzentrierung von metallsulfathaltiger Dünnsäure (4) in einer dreistufigen Vakuumzwangsumlaufverdampferanlage, bei dem Dünnsäure der ersten Stufe (1) zugeführt wird und aus der dritten Stufe (3) eine aufkonzentrierte Schwefelsäure (7) abgeführt wird, wobei Wasserdampf (5) und/oder Brüdendampf (6) als Heizmedium in der dreistufigen Vakuumzwangsumlaufverdampferanlage eingesetzt werden und wobei im Verdampferbehälter (1b) der ersten Stufe (1) ein Druck von 0,4 bis 0,7 bar sowie eine Temperatur von 80 bis 120°C, im Verdampferbehälter (2b) der zweiten Stufe (2) ein Druck von 0,02 bis 0,06 bar sowie eine Temperatur von 50 bis 90°C und im Verdampferbehälter (3b) der dritten Stufe (3) ein Druck von 0,02 bis 0,06 bar sowie eine Temperatur von 80 bis 120°C eingestellt werden und wobei die nicht als Heizmedium eingesetzten Brüdendämpfe (8) bzw. (8a) kondensiert werden, dadurch gekennzeichnet, daß 30 bis 95% der Dünnsäure (4) dem Verdampferbehälter (1b) der ersten Stufe (1) kontinuierlich zugeführt werden und die restliche Menge der Dünnsäure (4) dem Verdampferbehälter (2b) der zweiten Stufe (2) kontinuierlich zugeführt wird.

2. Verfahren nach Anspruch 1, dadurch gekennzeichnet, daß mindestens ein Teil (4a) der Dünnsäure (4) vor Eintritt in die dreistufige Vakuumzwangsumlaufverdampferanlage in mindestens einem Vorwärmer (9) auf 30 bis 99°C vorgewärmt wird.

3. Verfahren nach Anspruch 1 oder Anspruch 2, dadurch gekennzeichnet, daß die Dünnsäure (4) vor Eintritt in die dreistufige Vakuumzwangsumlaufverdampferanlage durch Ausnutzung von Prozeßwärme auf eine Konzentration von 25 bis 32 Gew.-% (feststofffrei) vorkonzentriert wird.

4. Verfahren nach einem der Ansprüche 1 bis 3, dadurch gekennzeichnet, daß in der ersten Stufe (1) und in der dritten Stufe (3) Wasserdampf (5) als Heizmedium eingesetzt wird und daß der aus dem Verdampferbehälter (1b) der ersten Stufe (1) abgeführte Brüdendampf (6) in der zweiten Stufe (2) als Heizmedium eingesetzt wird.

5. Verfahren nach Anspruch 4, dadurch gekennzeichnet, daß die in der zweiten Stufe (2) und in der dritten Stufe (3) anfallenden Brüdendämpfe (8) und (8a) getrennt in jeweils mindestens einem Kondensator (10 bzw. 10') kondensiert werden.

## Claims

1. A process of concentrating dilute sulphuric acid (4) containing metal sulphate in a three-stage vacuum evaporation plant using forced circulation, in which process dilute sulphuric acid is fed to the first stage (1) and concentrated sulphuric acid (7) is withdrawn from the third stage (3), steam (5) and/or overhead vapour (6) being used as a heating medium in the three-stage vacuum evaporator plant using forced circulation, and a pressure of 0.4 to 0.7 bar and a temperature of 80 to 120°C being maintained in the evaporating vessel (1b) of the first stage (1), a pressure of 0.02 to 0.06 bar and a temperature of 50 to 90°C being maintained in the evaporating vessel (2b) of the second stage (2), and a pressure of 0.02 to 0.06 bar and a temperature of 80 to 120°C being maintained in the evaporating vessel (3b) of the third stage (3), and those overhead vapours (8) or (8a) which are not used as a heating medium being condensed, characterised in that 30 to 95% of the dilute sulphuric acid (4) are continuously fed to the evaporating vessel (1b) of the first stage (1) and the remainder of the dilute sulphuric acid (4) is continuously fed to the evaporating vessel (2b) of the second stage (2).

2. A process according to Claim 1, characterised in that at least part (4a) of the dilute sulphuric acid (4) before entering the three-stage vacuum evaporation plant using forced circulation is preheated to 30 to 99°C in at least one preheater (9).

3. A process according to Claim 1 or 2, characterised in that the dilute sulphuric acid (4) before entering the three-stage vacuum evaporation plant using forced circulation is pre-concentrated to a concentration of 25 to 32% by weight (without solids) by utilisation of process heat.

4. A process according to one of Claims 1 to 3, characterised in that steam (5) is used as a heating medium in the first stage (1) and in the third stage (3) and that the overhead vapour (6) removed from the evaporating vessel (1b) of the first stage (1) is used as a heating medium in the second stage (2).

5. A process according to Claim 4, characterised in that the overhead vapours (8) and (8a) from the second stage (2) and from the third stage (3) are separately condensed in at least one condenser (10 or 10', respectively) each.

## Revendications

1. Procédé de concentration d'acide dilué (4) contenant du sulfate métallique dans un évaporateur sous vide à trois étages à circulation forcée, gui consiste à envoyer l'acide dilué au premier étage (1) et à soutirer du troisième étage (3) un acide sulfurique (7) concentré, de la vapeur d'eau (5) et/ou de la vapeur de buée (6) étant utilisée comme fluide de chauffage dans l'évaporateur sous vide à trois étages à circulation forcée et en établissant dans la cuve d'évaporateur (1b) du premier étage (1) et une pression de 0,4 à 0,7 bar, ainsi qu'une température de 80 à 120°C, dans la cuve d'évaporateur (2b) du deuxième étage (2) une pression de 0,02 à 0,06 bar ainsi qu'une température de 50 à 90°C et dans la cuve d'évaporateur (3b) du troisième étage (3) une pression de 0,02 à 0,06 bar ainsi qu'une température de 80 à 120°C, et les vapeurs de buée (8) ou (8a) qui ne sont pas utilisées comme fluide de chauffage étant condensées, caractérisé en ce qu'il consiste à envoyer en continu de 30 à 95% de l'acide dilué (4) à la cuve d'évaporateur (1b) du premier étage (1) et à envoyer en continu la quantité restante de l'acide dilué (4) à la cuve d'évaporateur (2b) du deuxième étage (2).

2. Procédé suivant la revendication 1, caractérisé en ce qu'il consiste à porter entre 30 et 99°C au moins une partie (4a) de l'acide dilué (4) avant l'entrée dans l'évaporateur sous vide à trois étages à circulation forcée dans au moins un réchauffeur (9).

3. Procédé suivant la revendication 1 ou la revendication 2, caractérisé en ce qu'il consiste à concentrer au préalable l'acide dilué (4) avant l'entrée dans l'évaporateur sous vide à trois étages à circulation forcée en tirant partie de la chaleur du procédé en portant la concentration à une valeur de 25 à 32% en poids (exempt de matière solide).

4. Procédé suivant l'une des revendications 1 à 3, caractérisé en ce qu'il consiste à utiliser dans le premier étage (1) et dans le troisième étage (3) de la vapeur d'eau (5) comme fluide de chauffage et à utiliser la vapeur de buée (6) évacuée de la cuve d'évaporateur (1b) du premier étage (1) dans le deuxième étage (2) comme fluide de chauffage.

5. Procédé suivant la revendication 4, caractérisé en ce qu'il consiste à condenser les vapeurs de buée (8) et (8a) se produisant dans le deuxième étage (2) et dans le troisième étage (3) séparément dans respectivement au moins un condenseur (10) et (10').
